# EUROPÄISCHE PATENTSCHRIFT

(11) **EP 2 485 927 B1**
(45) Veröffentlichungstag und Bekanntmachung des Hinweises auf die Patenterteilung: **14.12.2016**
(21) Anmeldenummer: 10768437.5
(22) Anmeldetag: 08.10.2010
(51) Int. Cl.: B60S 1/38

(54) **WISCHBLATT**
WIPER BLADE
BALAI D'ESSUIE-GLACE

(30) Priorität: 09.10.2009 DE 102009045549; 07.10.2010 DE 102010042095
(43) Veröffentlichungstag der Anmeldung: 15.08.2012
(73) Patentinhaber: Robert Bosch GmbH, 70442 Stuttgart (DE)
(72) Erfinder: DE BLOCK, Peter, B-3545 Halen (BE); BONROY, Jan, B-3001 Heverlee (BE); CRIEL, Paul, B-3800 Sint-Truiden (BE); SAEVELS, Peter, B-3384 Attenrode (BE); AZNAG, Mohamed, B-3271 Scherpenheuvel-Zichem (BE); BEELEN, Hans, B-3540 Herk de Stad (BE); WINDMOLDERS, Eric, B-3510 Kermt (BE)
(86) Internationale Anmeldenummer: PCT/EP2010/065056
(87) Internationale Veröffentlichungsnummer: WO 2011/042519

(56) Entgegenhaltungen:
- WO-A1-2008/020003
- DE-A1-102006 061 680
- DE-A1-102007 052 357
- US-A1- 2008 127 442
- US-A1- 2008 289 134

## Beschreibung

### Stand der Technik

Die Erfindung geht von einem Wischblatt nach dem Oberbegriff des Anspruchs 1 aus.

Aus der US 200801-27442 A1 ist ein gattungsgemäßes Wischblatt bekannt. Es besitzt einen Wischleistenträger mit einem angeformten Spoiler, in dem in einem Längskanal ein federelastisches Tragelement in Form einer Federschiene untergebracht ist. An den Enden des Wischleistenträgers sind Endkappen vorgesehen, die auf der Abströmseite des Fahrtwinds an der Längsseite eine Federklappe haben, die zur Montage und Demontage der Wischleiste nach außen geschwenkt werden können. An der Innenseite der Federklappen sind Fixiermittel angeordnet, die bei der Betätigung der Federklappe mit der Wischleiste in eine oder außer einer Wirkverbindung gebracht werden können, indem ein quer zur Wischleiste verlaufender Finger der Federklappe in eine quer verlaufende Öffnung der Wischleiste eingreift oder außer Eingriff gebracht wird. Ein parallel zu diesem verlaufender Finger greift in geschlossenem Zustand der Federklappe in eine Aussparung der Federschiene ein. Somit sind der Wischleistenträger, die Federschiene und die Wischleiste in Längsrichtung zueinander fixiert.

Aus der WO 2008/020003 ist ein Wischblatt mit einem lang gestreckten, federelastischen, konkav zu einer Fahrzeugscheibe vorgekrümmten Tragelement bekannt, das mindestens eine Federschiene aufweist, und mit einer Wischleiste, die von dem Tragelement auswechselbar aufgenommen ist. Die Wischleiste ist an einem Ende mit einer Verdickung fest verbunden, mittels der die Wischleiste relativ zum Tragelement fixierbar ist. Dies geschieht dadurch, dass die Verdickung an einer Stirnseite der Federschiene oder an einer Brücke anlegbar ist, die zwei als Tragelement dienende Federschienen miteinander verbindet. In dieser Position wird die Wischleiste relativ zum Tragelement durch eine Endkappe fixiert. Diese kann die Verdickung und die Brücke übergreifen und durch lösbare Rastmittel in der Position fixieren. Im Falle der Demontage der Wischleiste des Wischblatts werden die Rastmittel gelöst, sodass nach Entfernung der Endkappe die Wischleiste aus dem Tragelement gezogen werden kann.

Die Verdickung kann durch unterschiedliche Gestaltungselem ente verwirklicht werden, z.B. durch separate Bauelemente, die mit der Wischleiste verbunden werden, oder angeformte Teile, die am Ende der Wischleiste eine örtliche Querschnittvergrößerung des Querschnittprofils der Wischleiste bewirken. Zu den erstgenannten Maßnahmen gehören Klammern aus Metall oder Kunststoff oder einer Kombination aus diesen Werkstoffen, z.B. kunststoffbeschichtete Metallklammern oder bügelförmige Kunststoffteile, die durch Metallklammern an der Wischleiste befestigt sind. Im einfachsten Fall genügen Heftklammern, deren Schenkel zur Wischlippe weisend durch den oberen Teil der Kopfleiste gedrückt und zum Steg hin umgebogen werden, der zwischen den Längsnuten für die Federschienen verläuft.

Eine andere Möglichkeit besteht darin, dass die Heftklammer in Längsrichtung der Wischleiste verläuft, während ihre Schenkel den Steg zwischen den Längsnuten quer zur Längsrichtung durchbohren und auf der gegenüberliegenden Seite des Steges nach innen umgebogen werden. Wird die Verdickung an die Wischleiste angeformt, so kann sie im Endbereich der Längsnuten diese ganz oder teilweise ausfüllen. Ferner kann sie als Wulst oder Vorsprung über das normale Querschnittprofil der Wischleiste vorstehen. Hierbei kann es sich um angespritzte oder anextrudierte Teile der Wischleiste aus einem gleichen oder ähnlichen Werkstoff handeln. Grundsätzlich ist es auch möglich, diese Teile als separate Teile durch Kleben, Vulkanisieren oder Schweißen mit der Wischleiste zu verbinden.

Gemäß einer Ausgestaltung der Erfindung ist mindestens an einer Endkappe eine Öffnung vorgesehen, die geöffnet und geschlossen werden kann. Hierzu dient eine Klappe, die die Öffnung verschließt. Die Klappe ist über ein Filmgelenk, dessen Schwenkachse in Längsrichtung des Wischblatts verläuft, mit der Kappe verbunden. Im geschlossenen Zustand verrastet die Klappe mit einer Rastkante an einem Verbindungssteg der Endkappe, wobei die Stirnseite der Klappe, die dem Ende der Wischleiste zugewandt ist, mit einer Rippe an der zugewandten Stirnseite der Brücke des Tragelements anliegt, sodass das Tragelement mit den Federschienen durch die Endkappe relativ zur Wischleiste fixiert ist. Die Außenkontur der geschlossenen Klappe schließt bündig mit der Anströmfläche bzw. Kehlung der Endkappe ab, sodass auch bei Hochgeschwindigkeitsfahrzeugen keine Windgeräusche an der Endkappe entstehen.

Aus der DE 10 2004 051 467 A1 ist ein Wischblatt bekannt. Sein Tragelement umfasst zwei parallel zueinander verlaufende Federschienen, die an ihren Enden durch eine Brücke miteinander verbunden sind. Zur Aufnahme einer Wischleiste bilden die Federschienen einen Längsspalt, sodass die Wischleiste in Längsrichtung auf das Tragelement aufgefädelt werden kann. Die Wischleiste wird in Längsrichtung relativ zum Tragelement durch Endkappen gesichert. Diese besitzen ein Element mit einem Dorn, der am Ende der Montage in eine Kopfleiste der Wischleiste gedrückt wird. In montiertem Zustand liegt der Dorn an der Stirnseite der Brücke an, die dem Ende der Wischleiste abgewandt ist. Bei einem Ausführungsbeispiel befindet sich der Dorn an einer Federzunge, die von einer Klappe mit einem Exzenter gegen die Kopfleiste gedrückt wird. Die Schwenkachse der Klappe verläuft quer zur Längsrichtung des Wischblatts. Bei einer anderen Ausführung ist der Dorn unmittelbar an der Klappe angeordnet, wobei die Schwenkachse der Klappe in der Nähe der äußeren Stirnwand der Endkappe vorgesehen ist.

Aus der DE 100 25 710 A1 ist ein Wischblatt in Flachbalkenbauweise bekannt, das eine gummielastische Wischleiste mit einer Wischlippe besitzt. Zwischen der Wischlippe und einer Kopfleiste sind seitliche Längsnuten vorgesehen, in die als Tragelement zwei zur Wischlippe konkav vorgekrümmte Federschienen eingesetzt sind. Diese werden durch Brücken an ihren Enden und durch ein mittleres Anschlusselement zusammengehalten. Die Brücken besitzen als Fixiermittel einen angeformten Fortsatz, der an seinem freien Ende mindestens einen zur Kopfleiste gerichteten Vorsprung aufweist. Bei der Montage wird der Fortsatz gegen die Kopfleiste gebogen, sodass der Vorsprung in die Kopfleiste eingreift und die Federschienen in Längsrichtung relativ zur Wischleiste fixiert. Die Brücken werden schließlich mit Endkappen abgedeckt.

Ein ähnliches Wischblatt ist aus der DE 102006059077 bekannt. Hierbei drückt eine in Längsrichtung weisende Haltefeder, die an der Brücke befestigt ist, mit einem quer verlaufenden, in Längsrichtung v-förmigen Profil gegen eine Kopfleiste der Wischleiste und fixiert diese relativ zum Tragelement. Der Druck auf die Kopfleiste kann durch geeignete Vorrichtungen in der Endkappe verstärkt werden, an denen sich die Haltefeder abstützt.

Aus der DE 102 45 693 A1 ist ein Wischblatt bekannt, das als Tragelement zwei parallel verlaufende Federschienen aufweist, die an ihren Enden jeweils durch eine Brücke miteinander verbunden sind. Ferner sind Haltemittel vorgesehen, die die Wischleiste relativ zu den Federschienen fixieren. Zur Demontage der Wischleiste sind die Haltemittel leicht lösbar. Sie sind einerseits mit der Brücke und andererseits über einen Stoffschluss, einen Kraftschluss und/oder über einen Formschluss mit der Wischleiste verbunden. Bei einem Ausführungsbeispiel greift ein Dorn durch eine Führungsbohrung der Brücke in die Wischleiste und wird durch eine Endkappe, die durch ein Federelement an der Brücke verrastet, in der Montageposition gehalten. Das Federelement kann durch ein von außen bedienbares Element gelöst werden, sodass die Endkappe und der Dorn zum Wechseln der Wischleiste gelöst werden können. Im montierten Zustand stützt sich die Endkappe mit einer geschlossenen Stirnseite, die zum Ende des Wischblatts weist, an der zugeordneten Stirnseite der Brücke ab. Ein anderes Ausführungsbeispiel zeigt eine aus Blech gefertigte Halteeinheit, die mit einem zur Wischleiste gebogenen Dorn in die Wischleiste gedrückt wird. Bei der Montage der Federschienen wird die Halteeinheit unter die Brücke geschoben und zwischen den Anschlagflächen und einer Federzunge an der Brücke verrastet. Die Federzunge kann nach Entfernen der Endkappe in eine Freigabeposition gedrückt werden, sodass die Federschienen demontiert werden können.

### Offenbarung der Erfindung

Nach der Erfindung ist das Fixiermittel als eine zur Kopfleiste hin sich keilförmig verjüngende Schneide ausgebildet. Diese kann sich in die Kopfleiste einschneiden. Durch die erfindungsgemäßen Maßnahmen kann die Wischleiste in vielfältiger Weise sicher nur an einem Ende relativ zum Tragelement fixiert werden, sodass das Tragelement während des Betriebs des Wischblatts nicht aus der Wischleiste hervortreten kann. Dies ist besonders vorteilhaft, wenn die Fixierung an dem Ende des Wischblatts erfolgt, das während des Betriebs einen großen Kreisbogen beschreibt und damit der größeren Zentrifugalkraft unterliegt. Gleichzeitig wird die Relativbewegung auf der Länge des Wischblatts zwischen der Wischleiste und dem Tragelement im Übrigen nicht behindert, die für eine zwangsfreie Biegung der Wischleiste erforderlich ist, um den unterschiedlichen Krümmungen der Fahrzeugscheibe folgen zu können.

Gemäß einer Ausgestaltung der Erfindung ist an der Innenseite der Klappe ein quer zur Kopfleiste der Wischleiste verlaufendes Fixiermittel vorgesehen, das im geschlossenen Zustand der Klappe auf die Kopfleiste drückt und sich an einer Brücke in Längsrichtung abstützt, die zwei parallel nebeneinander verlaufende, als Tragelement dienende Federschienen miteinander verbindet. Das Fixiermittel wirkt als Druckstück, indem es ein Stück weit in die elastische Kopfleiste der Wischleiste eindringt.

Ferner können an der Innenseite der Klappe weitere Fixiermittel in Form von Stützen vorgesehen sein, die zu beiden Längsseiten der Kopfleiste angeordnet sind und sich bei geschlossener Klappe auf dem Tragelement abstützen. Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Darstellung eines Wischblatts,
Fig. 2 eine perspektivische Darstellung eines Wischblattendes mit einer Endkappe mit einer Klappe im vergrößerten Maßstab,
Fig. 3 eine perspektivische Darstellung eines Wischblattendes ohne Spoilerteil und ohne Basisteil der Endkappe,
Fig. 4 eine Variante zu Fig. 3,
Fig. 5 und Fig. 6 eine weitere Variante zu Fig. 3,
Fig. 7 eine weitere Variante zu Fig. 3,
Fig. 8 eine Variante mit einer Quernut in der Kopfleiste der Wischleiste,
Fig. 9 eine Wischleiste nach Fig. 7 oder Fig. 8,
Fig. 10 eine Variante zu Fig. 8,
Fig. 11 eine Variante mit einer Federzunge mit einer Nase,
Fig. 12 Varianten von Anordnungen der Federzunge nach Fig. 11,
Fig. 13 eine Variante mit Halterarmen an der Innenseite einer Stirnwand der Endkappe,
Fig. 14 eine perspektivische Darstellung einer Endkappe nach Fig. 13 von unten,
Fig. 15 einen Querschnitt durch ein Wischblatt im Bereich einer Endkappe,
Fig. 16 ein Detail aus Fig. 15 im vergrößerten Maßstab in perspektivischer Ansicht,
Fig. 17 bis Fig. 19 eine Variante mit einem Sperrhaken an seinem Zwischenboden der Endkappe und
Fig. 20 bis Fig. 27 Varianten von Elementen, die an der Kopfleiste der Wischleiste befestigt sind.

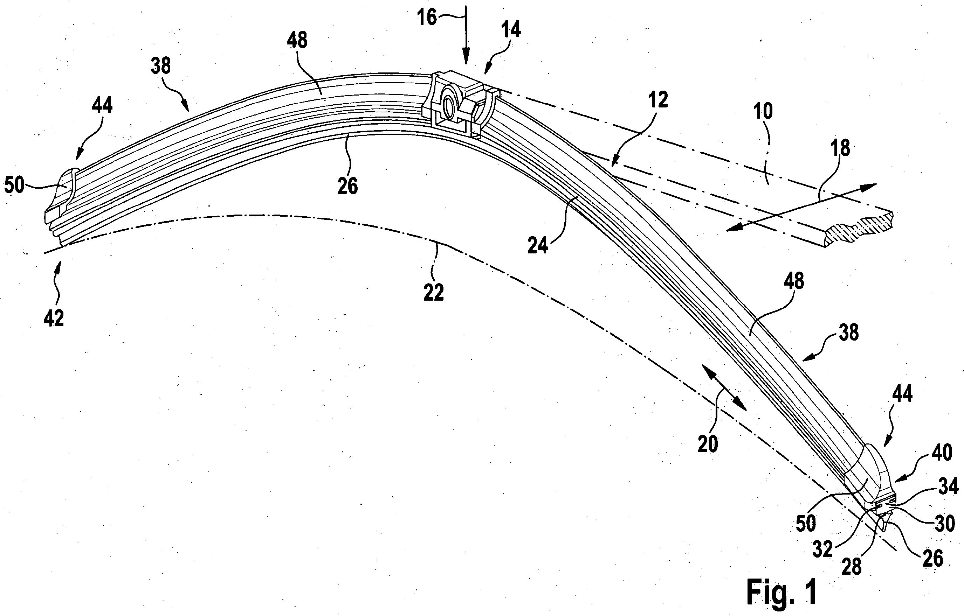

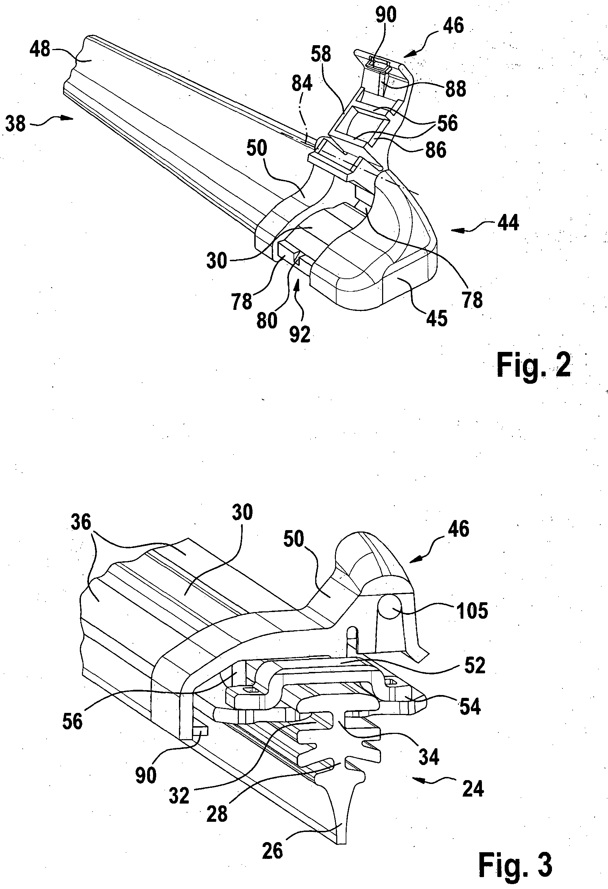

Ein Wischblatt 12 weist ein bandartig lang gestrecktes, federelastisches Tragelement 36 in Form zweier mit einem Abstand parallel zueinander verlaufender Federschienen auf (Fig. 1 und Fig. 3). Diese sind mit ihren einander zugewandten, inneren Randstreifen in Längsnuten 32 einer Kopfleiste 30 einer Wischleiste 24 eingesetzt, während ihre äußeren Randstreifen ein Stück weit aus den Längsnuten 32 seitlich vorstehen. Zwischen den Längsnuten 32 befindet sich ein Steg 34. Zu einer Fahrzeugscheibe 22 hin schließt sich an die Kopfleiste 30 über einen Kippsteg 28 eine Wischlippe 26 an, die während einer Wischbewegung in Richtung eines Doppelpfeils 18 über die Fahrzeugscheibe 22 gleitet. Hierzu treibt ein Wischarm 10 das Wischblatt 12 über eine Anschlussvorrichtung an, deren wischblattseitiger Teil 14 mit dem Wischarm 10 gelenkig und lösbar verbunden werden kann, während er im mittleren Bereich des Wischblatts 12 fest auf dessen Tragelement 36 sitzt. Gleichzeitig belastet der Wischarm 10 das Wischblatt 12 in Richtung auf die Fahrzeugscheibe 22 mit einer Anpresskraft 16. Der Wischarm 10 und die Fahrzeugscheibe 22 sind durch strichpunktierte Linien angedeutet. Während des Betriebs beschreiben die Enden 40, 42 des Wischblatts 12 bei einer Schwenkbewegung um eine nicht dargestellte Wischerwelle in Richtung des Doppelpfeils 18 Kreisbögen, wobei das innere Ende 40 einen inneren Kreisbogen und das äußere Ende 42 einen äußeren Kreisbogen beschreiben.

Die stärkste Krümmung der Fahrzeugscheibe 22 ist geringer als die Krümmung des mit seinen beiden Enden 40, 42 an der Fahrzeugscheibe 22 anliegenden, noch unbelasteten Wischblatts 12 (Fig. 1). Unter der Anpresskraft 16 legt sich das Wischblatt 12 mit seiner Wischlippe 26 über seine gesamte Länge an die Fahrzeugscheibe 22 an. Dabei baut sich im dem aus Metall oder Kunststoff gefertigten, federelastischen Tragelement 36 eine Spannung auf, welche für eine ordnungsgemäße Anlage der Wischleiste 24 bzw. der Wischlippe 26 über deren gesamte Länge an der Fahrzeugscheibe 22 sowie für eine gleichmäßige Verteilung des Anpressdrucks sorgt.

Zu beiden Seiten des wischblattseitigen Anschlusselements 14 schließen sich in Längsrichtung 20 Spoilerteile 38 an, die auf dem Tragelement 36 geführt sind. An den Enden 40, 42 des Wischblatts 12 sind Endkappen 44 vorgesehen, die ebenfalls auf dem Tragelement 36 geführt sind, an diesem verrasten und die Enden der Spoilerteile 38 abdecken. Die Spoilerteile 38 besitzen ein Strömungsprofil 48, , während die Strömungsprofile der Endkappen 44 mit 50 gekennzeichnet sind.

Eine der Endkappen 44, vorzugsweise die am äußeren Ende 42 dient zum Fixieren der Wischleiste 24 relativ zum Tragelement 36. Sie besitzt ein Basisteil 45, dessen nach außen weisendes Ende über Holme 78 mit einem zum Spoilerteil 38 weisenden Teil verbunden ist. Im Bereich der Holme 78 ist eine Klappe 46 um eine Schwenkachse 84, die in Längsrichtung 20 verläuft, schwenkbar gelagert. Die Schwenkachse 84 wird durch Lagerelemente 105 an der Klappe 46 und durch Lagerelemente 106 an dem Basisteil 45 gebildet. Die Lagerelemente 105 bzw.106 sind Zapfen, die in entsprechende Lagerbohrungen des jeweils anderen Teils passen.

Die Klappe 46 verschließt eine Öffung in dem Basisteil 45. Sie besitzt eine Raste 90 an einer Kante, die entfernt von der Schwenkachse 84 zu dieser parallel verläuft. Die Raste 90 rastet im geschlossenen Zustand der Klappe 46 in eine entsprechende Aussparung 92 des zugehörigen Holms 78 ein. Die Klappe 46 besitzt ferner zur Versteifung im Bereich der Raste 90 eine Zentrierrippe 88, die im geschlossenen Zustand in eine Nut 80 des zugehörigen Holms 78 eingreift. An der Innenseite der Klappe 46 befinden sich Querstreben 86, von denen mindestens eine als Fixiermittel in Form einer Schneide 58 ausgebildet ist. Diese drückt im geschlossenen Zustand der Klappe 46 auf die Oberseite der Kopfleiste 30, wodurch diese in Längsrichtung 20 gegenüber der Klappe 46 fixiert ist, die wiederum durch das Basisteil 45 relativ zum Tragelement 36 fixiert ist.

Das Tragelement 36, das grundsätzlich auch aus einer Federschiene bestehen kann, die in einem mittleren Längskanal der Kopfleiste 30 untergebracht ist, besteht in den dargestellten Ausführungsbeispielen aus zwei parallel verlaufenden Federschienen, die an ihren Enden durch eine Brücke 52 miteinander verbunden sind, indem Füße 54 der Brücke 52 durch geeignete Mittel, z. B. durch Schweißen, Kleben, Nieten oder dergleichen am Tragelement 36 befestigt sind. Im geschlossenen Zustand der Klappe 46 liegen die Fixiermittel 58 an der Stirnseite der Brücke 52 an, die dem Spoilerteil 38 zugewandt ist. Somit ist die Wischleiste 24 über die Fixiermittel 58 der Klappe 46 in einer ersten Richtung relativ zum Tragelement 36 fixiert.

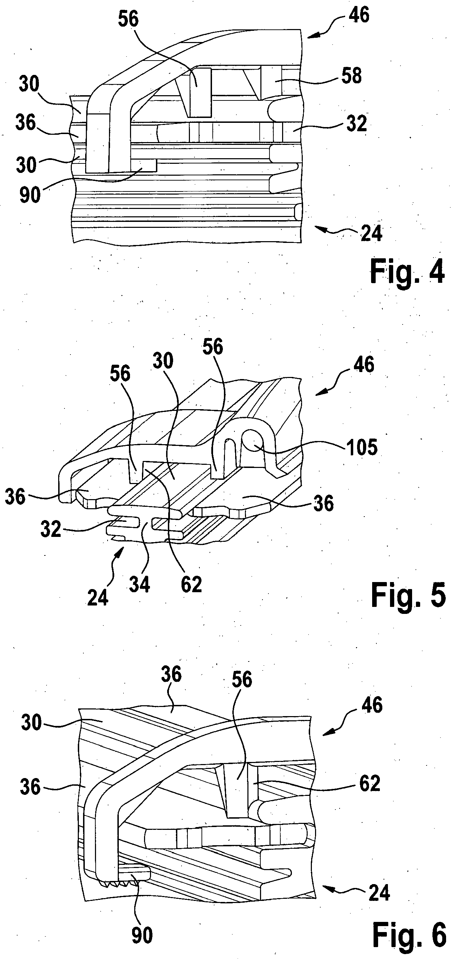

Zusätzlich oder allein können Fixiermittel 56 in Form von Stützen vorgesehen werden, die zu beiden Seiten der Kopfleiste 30 sich auf dem Tragelement 36 abstützen und auf der gleichen Seite wie die Fixiermittel 58 an den Füßen 54 der Brücke 52 anliegen können. Auf der den Stützen entgegengesetzten Seite wird das Tragelement 36 durch Führungsleisten 60 geführt. Die Stützen 56 können gemäß einer weiteren Ausführung Seitenschneiden 62 aufweisen, die der Kopfleiste 30 zugewandt sind und beim Schließen der Klappe 46 in die Randbereiche der Kopfleiste 30 einschneiden (Fig. 5 und 6).

In der zur ersten Richtung entgegengesetzten zweiten Richtung wird das Tragelement 36 zur Wischleiste 24 durch eine weitere Querstrebe 86 der Klappe 46 oder des Basisteils 45 fixiert, wobei die Querstrebe 86 auf der den Fixiermitteln 56, 58 gegenüberliegenden Seite der Brücke 52 bzw. deren Füße 54 oder an den Stirnseiten des Tragelements 36 anliegt.

Bei einer weiteren Ausgestaltung treten an die Stelle der Fixiermittel 58 Fixiermittel 66 in Form von Blockierelementen, die an der Innenseite der Klappe 46 angeformt sind und in eine Quernut 64 der Kopfleiste 30 eingreifen. Somit wird diese gegenüber der Endkappe 44 fixiert, die ihrerseits mit dem Tragelement 36 verrastet, z. B. durch geeignete Rastmittel an der Brücke 52 oder in seitlichen Aussparungen 140.

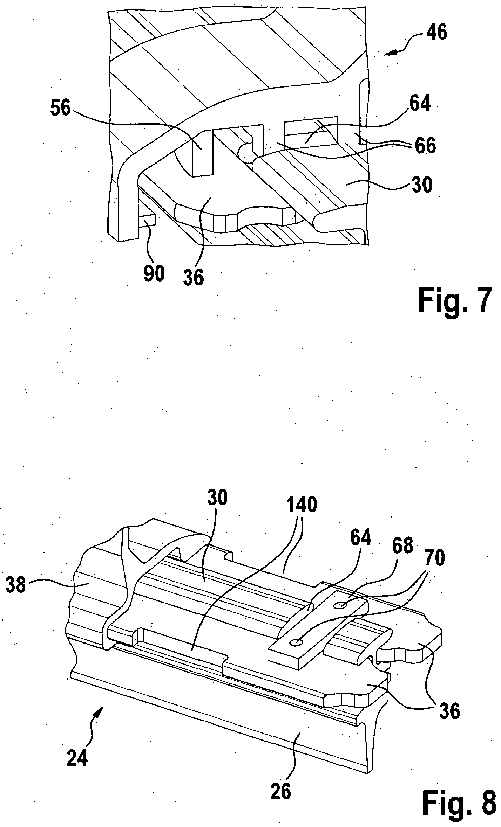

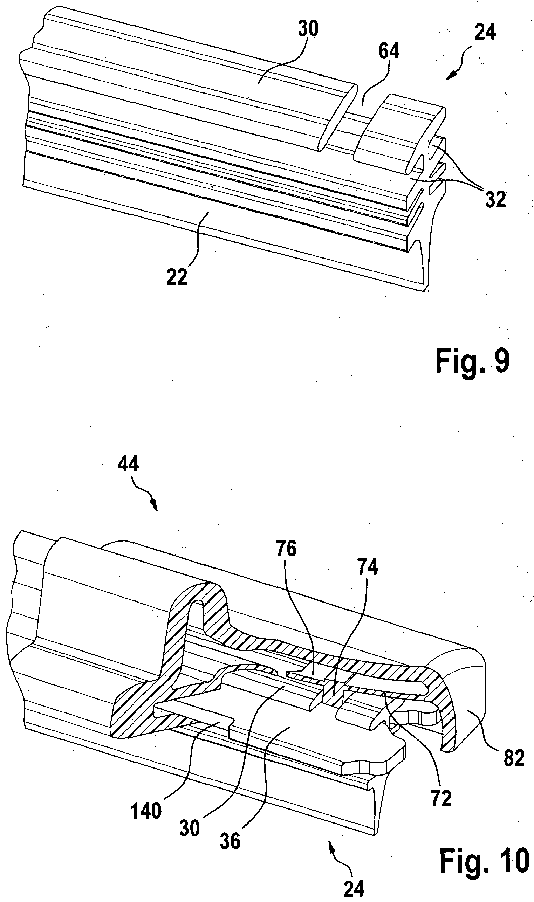

Bei der Ausführung nach Fig. 8 befindet sich in der Quernut 64 ein passender Riegel 68, der an Befestigungspunkten 70 durch Kerbstifte, Nieten, Schweißpunkte oder dergleichen an dem Tragelement 36 befestigt ist. Somit ist die Wischleiste 24 über den Riegel 68 unmittelbar am Tragelement 36 fixiert. Sie kann aber auch, wie die Ausführung nach Fig. 10 zeigt, durch einen Sperrblock 74 indirekt fixiert werden, indem der Sperrblock 74 in die Quernut 64 der Kopfleiste 30 eingreift. Der Sperrblock 74 ist über eine an einer Stirnwand 82 angeformte Federzunge 72 angeordnet. Ein über den Sperrblock 74 vorstehender Anschlag 76 liegt am Rücken der Kopfleiste 30 an, sobald der Sperrblock in die Quernut 64 eingerastet ist. Die Fixierung der Wischleiste 24 gegenüber dem Tragelement 36 erfolgt über das Basisteil 45 der Endkappe 46, die mit dem Tragelement 36 in üblicher Weise verrastet ist.

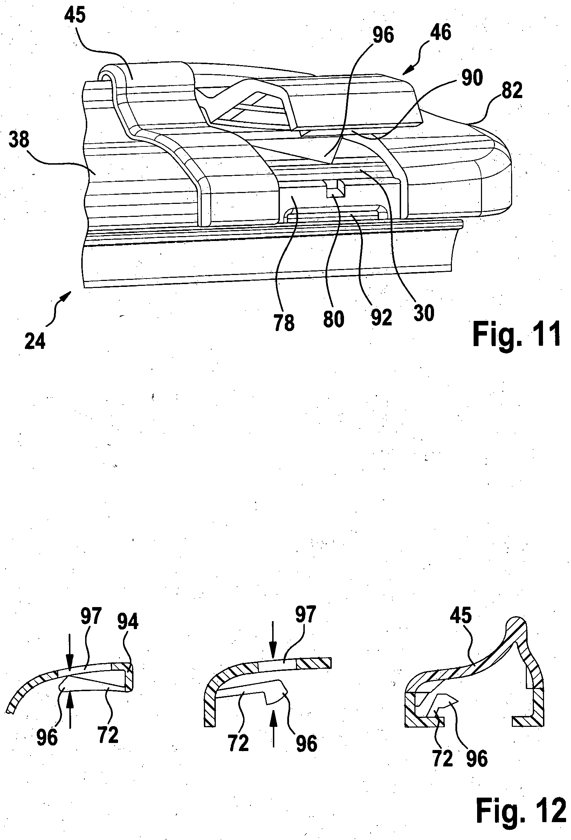

Bei der Ausführung nach Fig. 11 tritt anstelle der Federzunge 72 mit einem Sperrblock 74 eine Federzunge 72 mit einer Nase 96. Die Federzunge ragt bis in den Bereich der Klappe 46 und wird beim Schließen der Klappe 46 mit ihrer Nase 96 gegen die Kopfleiste 30 gedrückt, sodass die Nase 96 ein Stück weit in die Kopfleiste 30 eindringt oder sie einschneidet. In Fig. 11 ist die Federzunge 72 an einer Kante des Basisteils 45 angeordnet, die an der Öffnung für die Klappe 46 auf der Seite zum Spoilerteil 38 hin gelegen ist. Fig. 12 zeigt Varianten, bei der die Federzunge 72 an einer der Längsseiten des Basisteils 45 angeformt ist und durch eine Öffnung 97 in einer Zwischenwand 94 durch ein Element der Klappe 46 betätigt wird. Bei der dritten Anordnung ist die Federzunge 72 an der Stirnwand 82 des Basisteils 45 angeformt und ragt von dort aus in den Bereich der Klappe 46.

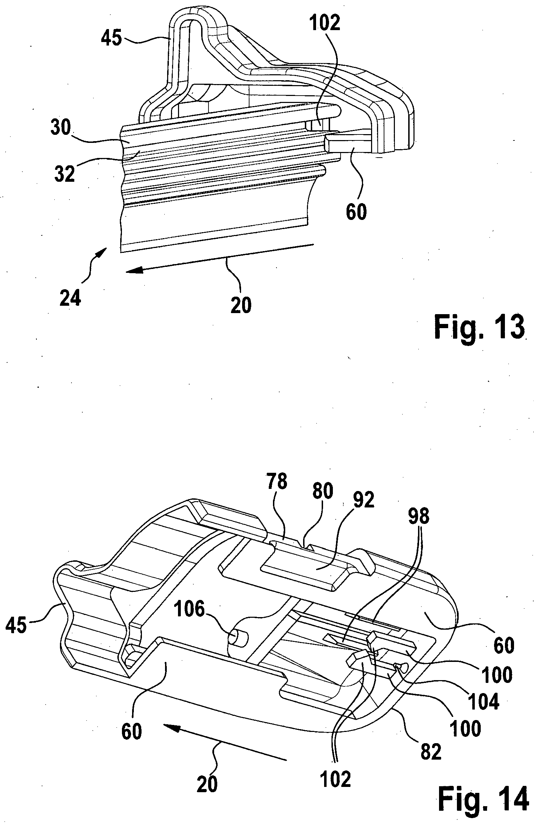

Die Ausgestaltung nach Fig. 13 und 14 zeigt zwei Haltearme 100, die in Längsrichtung 20 an der Innenseite der Stirnwand 82 des Basisteils 45 angeformt sind.

Sie greifen im montierten Zustand ein Stück weit in die Längsnut 32 der Kopfleiste 30 ein und verhaken sich mit einander gegenüberliegenden Zähnen 102 an ihren Enden in den zwischen den Längsnuten 32 gebildeten Steg 34. Zusätzlich dringt ein gleichfalls in Längsrichtung 20 gerichteter kurzer Zapfen 104 in die Wischleiste 24 und stützt diese in einem Bereich ab, in dem das Tragelement 36 nicht mehr wirksam ist. An der Innenseite der Deckwand des Basisteils 45, die das Strömungsprofil 50 bildet, befinden sich Führungsrippen 98, die etwa parallel zu den Haltearmen 100 verlaufen und eine seitliche Führung relativ zur Brücke 52 bilden.

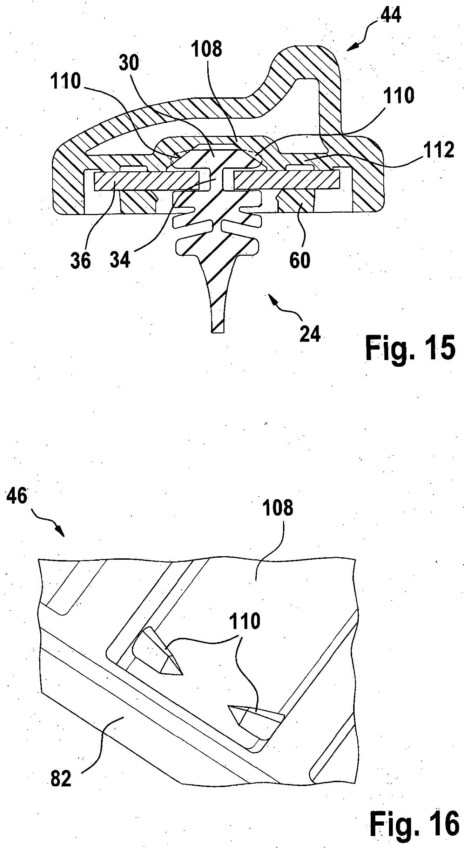

Bei der Ausführung nach Fig. 15 und 16 besitzt die Endkappe 44 einen Längskanal 108, der einen u-förmigen Querschnitt besitzt und zum Tragelement 36 hin offen ist. Der Längskanal 108 nimmt die Kopfleiste 30 auf, die bei der Montage in Längsrichtung 20 in den Längskanal 108 zum äußeren Ende 42 geschoben wird. Am Ende des Längskanals 108 bzw. im Bereich der Klappe 46 sind an den Flanken des Längskanals 108 keilförmige Druckelemente 110 angeformt. Wird nun die Klappe 46 geschlossen bzw. die Wischleiste 24 in Längsrichtung 20 in den Längskanal 108 eingeschoben, wird die Kopfleiste 30 durch die keilförmigen Druckelemente 110 gegen das Tragelement 36 gepresst und somit fixiert. Dabei erzeugen die keilförmigen Druckelemente 110 Anpresskräfte, die in Richtung auf den Steg 34 gerichtet sind.

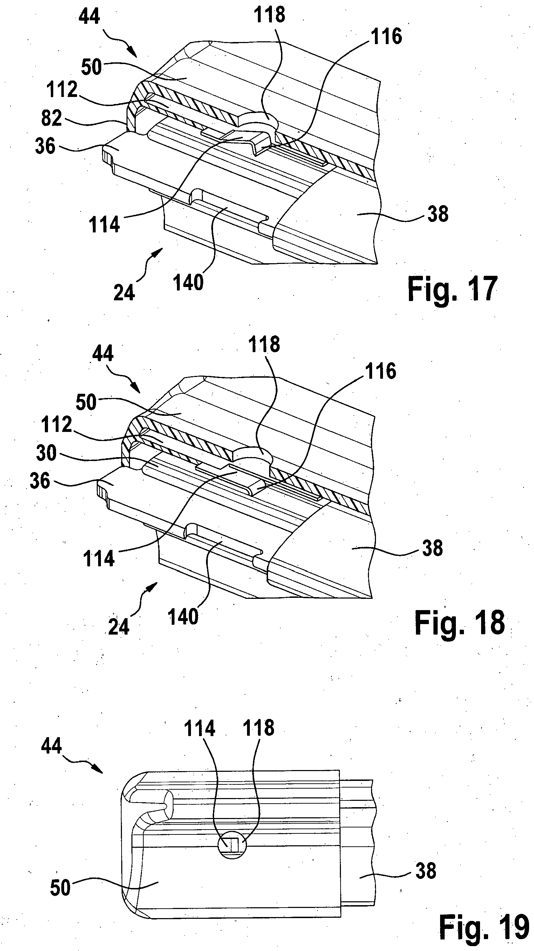

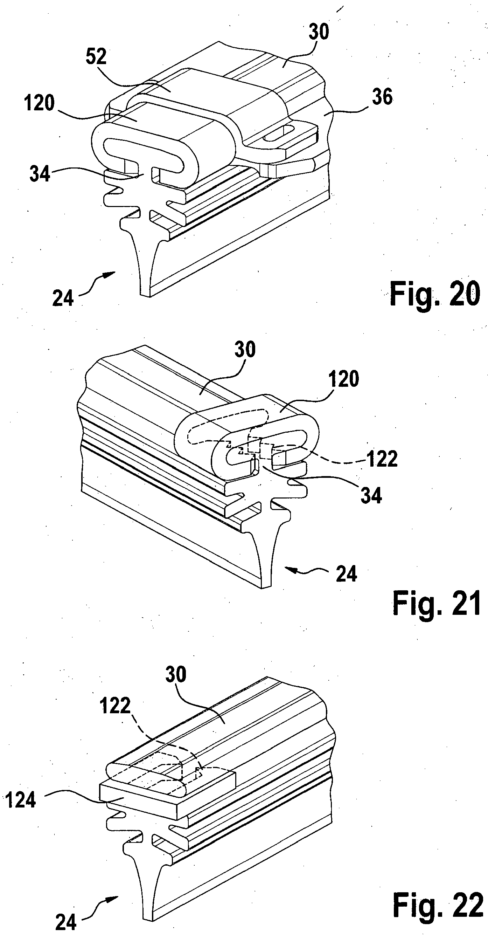

Bei der Ausführung nach Fig. 17 bis Fig. 19 wird die Fixierung der Wischleiste relativ zur Endkappe 44 durch einen Haken 114 aus Blech bewirkt. Dieser verläuft in Längsrichtung 20 und ist in einem Zwischenboden 112 der Endkappe 44 eingegossen. Bei der Montage der Endkappe 44 verrastet diese an einer seitlichen Aussparung 140 des Tragelements 36, während gleichzeitig die Stirnseite des Tragelements 36 an der Innenseite der Stirnwand 82 der Endkappe 44 anliegt. In dieser Position wird durch eine Öffnung 118 des Strömungsprofils 50 ein abgwinkeltes Ende 116 des Blechhakens 114 in die Kopfleiste 30 gedrückt. Somit ist die Wischleiste 24 über den Blechhaken 114 der Endkappe 44 relativ zum Tragelement 36 fixiert. Die Ausführungen nach Fig. 20 bis Fig. 27 zeichnen sich durch separate Elemente aus, die fest mit der Wischleiste 24 im Bereich eines Endes der Kopfleiste 30 verbunden sind. Nach Fig. 20 ist ein solches Element eine Klammer 120 die die Kopfleiste 30 vom Rücken her umfasst und mit ihren Schenkeln in die Längsnuten 32 eingreift. Dabei dringen Zähne 122 in die zugeordneten Längsseiten des Stegs 34 ein.

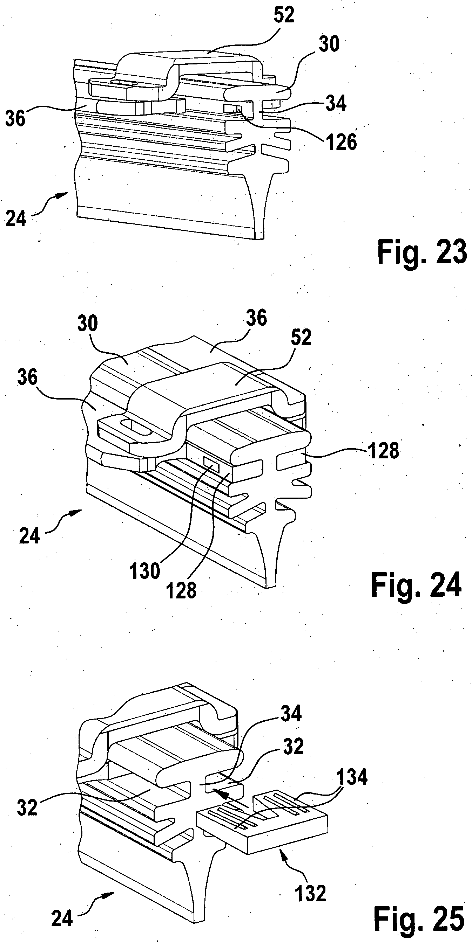

Die Ausführung nach Fig. 22 unterscheidet sich von der vorher beschriebenen Ausführung dadurch, dass eine Klammer 124 den Steg 34 von der Stirnseite aus umfasst und mit Zähnen 122 in den Steg 34 eingreift. Die Ausführung nach Fig. 23 und Fig. 24 besitzen Füllstücke 128, die in die Enden der Längsnuten 32 eingesetzt werden. Zwei einander gegenüberliegende Füllstücke 128 werden durch eine Öffnung 126 im Steg 34 mit mindestens einem Verbindungselement 130 in Form eines Nietstifts, eines Klippses oder dergleichen miteinander verbunden. Die Ausführung nach Fig. 25 ähnelt der Ausführung nach Fig. 22, jedoch entfallen die Zähne 122, sodass das u-förmige Füllstück 132 mit seinen in die Längsnuten 32 ragenden Schenkeln 134 stoffschlüssig durch Ultraschallschweißen, Kleben oder dergleichen mit der Kopfleiste 30 verbunden wird.

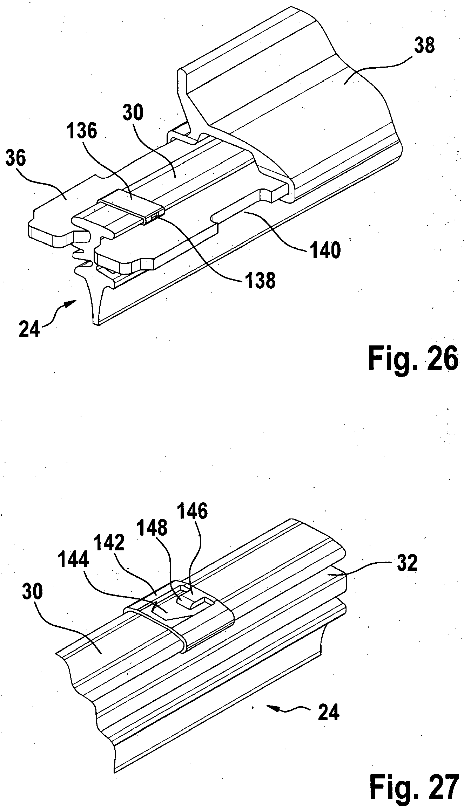

Die Ausführung nach Fig. 26 zeigt eine Blechklammer 136 die die Kopfleiste 30 von oben umfasst. An ihren Längsseiten besitzt die Klammer 136 Nasen 138 die seitlich in die Kopfleiste 30 eingepresst werden können. In ähnlicher Weise umfasst bei der Ausführung nach Fig. 27 eine Klammer 142 aus Blech die Kopfleiste 30 vom Rücken aus. Sie besitzt in ihrer Deckwand ein Fenster 144 in das in Längsrichtung 20 ein Sperrhaken 146 ragt, dessen abgewinkeltes Ende 148 bei der Montage in die Kopfleiste 30 gedrückt wird.

## Patentansprüche

1. Wischblatt (12) mit einem lang gestreckten, federelastischen, konkav zu einer Fahrzeugscheibe (22) vorgekrümmten Tragelement (36), das mindestens eine Federschiene aufweist, und mit einer Wischleiste (24), die von dem Tragelement (36) aufgenommen ist, wobei die Wischleiste (24) mindestens nahe einem Ende in Längsrichtung (20) relativ zum Tragelement (36) durch eine Endkappe (44) fixiert ist, die an einer Längsseite eine Öffnung besitzt, die durch eine Klappe (46) verschließbar ist, die um eine in Längsrichtung (20) verlaufende Schwenkachse (84) in eine Öffnungsposition und in eine Schließposition schwenkbar ist, wobei an der Endkappe (44) oder der Klappe (46) Fixiermittel (56, 58, 66) vorgesehen sind, die durch die Betätigung der Klappe (46) mit der Wischleiste (24) oder mit einem mit dieser verbundenen Element (120,124,128,132,136,142) in eine oder außer einer Wirkverbindung gebracht werden können, wobei sich die Fixiermittel (56, 58, 66) in Längsrichtung (20) an dem Tragelement (36) oder einem mit diesem fest verbundenen Element (52) abstützen bzw. von diesem lösen, **dadurch gekennzeichnet, dass** an der Innenseite der Klappe (46) ein quer zu einer Kopfleiste (30) der Wischleiste (24) verlaufendendes Fixiermittel (58) vorgesehen ist, das im geschlossenen Zustand der Klappe (46) auf die Kopfleiste (30) drückt und sich an einer Brücke (52) in Längsrichtung (20) abstützt, die zwei parallel neben einander verlaufende, als Tragelement (36) dienende Federschienen miteinander verbindet und das Fixiermittel (58) als eine zur Kopfleiste (30) keilförmig sich verjüngende Schneide ausgebildet ist.

2. Wischblatt (12) nacheinander Ansprüche 1 oder 2, **dadurch gekennzeichnet, dass** zu beiden Längsseiten der Kopfleiste (30) an der Innenseite der Klappe (46) Fixiermittel (56) in Form von Stützen vorgesehen sind, die sich bei geschlossener Klappe (46) auf dem Tragelement (36) abstützen.

3. Wischblatt (12) nach Anspruch 2, **dadurch gekennzeichnet, dass** die Fixiermittel (56) an ihren der Kopfleiste (30) zugewandten Seiten Seitenschneiden (62) aufweisen, die bei geschlossener Klappe (46) in die Kopfleiste (30) eindringen.

4. Wischblatt (12) nach Anspruch 1, **dadurch gekennzeichnet, dass** die Wischleiste (24) im Endbereich ihrer Kopfleiste (30) eine Quernut (64) besitzt, in die mindestens ein an der Klappe (46) angeformtes Blockierelement (66) eingreift, wenn die Klappe (46) schließt.

5. Wischblatt (12) nach Anspruch 1, **dadurch gekennzeichnet, dass** die Wischleiste (24) im Endbereich ihrer Kopfleiste (30) eine Quernut (64) besitzt, in die bei der Montage ein Querriegel (68) eingefügt wird, der mit dem Tragelement (36) fest verbunden wird.

6. Wischblatt (12) nach Anspruch 1, **dadurch gekennzeichnet, dass** die Wischleiste (24) im Endbereich ihrer Kopfleiste (30) eine Quernut (64) besitzt, in die bei der Montage ein Sperrblock (74) eingreift, der am freien Ende einer mit der Endkappe (44) verbundenen Federzunge (72) verbunden ist.

7. Wischblatt (12) nach Anspruch 6, **dadurch gekennzeichnet, dass** die Federzunge (72) mit einem über den Sperrblock (74) vorstehenden Teil an der Kopfleiste (30) anliegt.

8. Wischblatt (12) nach Anspruch 1, **dadurch gekennzeichnet, dass** an einem Basisteil (45) der Endkappe (44) eine Federzunge (72) angeformt ist, an deren freiem Ende eine Nase (96) angeordnet ist, die beim Schließen der Klappe (46) durch diese gegen die Kopfleiste (30) gedrückt wird.

9. Wischblatt (12) nach einem der vorhergehenden Ansprüche, **dadurch gekennzeichnet, dass** die Klappe (46) an ihrer von der Schwenkachse (84) entfernt liegenden Längskante eine Raste (90) aufweist, die im geschlossenen Zustand der Klappe (46) in eine entsprechende Aussparung (92) des Basisteils (45) eingreift.

10. Wischblatt (12) nach einem der vorhergehenden Ansprüche, **dadurch gekennzeichnet, dass** an der Innenseite der nach außen weisenden Stirnwand (82) des Basisteils (45) zwei im Abstand voneinander in Längsrichtung (20) verlaufende Haltearme (100) vorgesehen sind, die in die Längsnuten (32) der Wischleiste (24) eingreifen und sich mit ihren einander zugewandten Zähnen (102) anderen freien Enden an dem Steg (34) fest halten.

11. Wischblatt (12) nach Anspruch 10, **dadurch gekennzeichnet, dass** im Bereich der Haltearme (100) zur Wischlippe (26) der Wischleiste (24) versetzt, an der Stirnwand (82) ein kurzer Zapfen (104) vorgesehen ist, der bei der Montage stirnseitig in die Wischleiste (24) eindringt.

12. Wischblatt (12) nach Anspruch 10 oder 11, **dadurch gekennzeichnet, dass** auf der der Wischleiste (24) abgewandten Seite der Haltearme (100) zwei in Längsrichtung (20) verlaufende Führungsrippen (98) angeordnet sind, die die Brücke (52) zwischen sich einschließen.

13. Wischblatt (12) nach einem der vorhergehenden Ansprüche, **dadurch gekennzeichnet, dass** die Endkappe (44) einen Zwischenboden (112) mit einem Längskanal (108) besitzt, der den über das Tragelement (36) vorstehenden Teil der Kopfleiste (30) aufnimmt, während sich der Zwischenboden (112) seitlich des Längskanals (108) am Tragelement (36) abstützt, wobei im Längskanal (108) keilförmige Druckelemente (110) angeordnet sind, die im montierten Zustand auf den Steg (34) gerichtete Anpresskräfte auf die Kopfleiste (30) erzeugen.

14. Wischblatt (12) nach einem der Ansprüche 1 bis 12, **dadurch gekennzeichnet, dass** die Endkappe (44) einen Zwischenboden (112) besitzt, in dem ein in Längsrichtung (20) verlaufender Blechhaken (114) eingegossen ist, dessen abgewinkeltes Ende (116) im montierten Zustand in die Kopfleiste (30) eingreift.

15. Wischblatt (12) nach Anspruch 13, **dadurch gekennzeichnet, dass** der Blechhaken (114) durch eine Öffnung (118) in dem Strömungsprofil (50) der Endkappe (40) betätigbar ist.

16. Wischblatt (12) nach einem der vorhergehenden Ansprüche, **dadurch gekennzeichnet, dass** am Ende der Wischleiste (24) ein Element (120, 124, 128, 132, 136, 142) befestigt ist, das im montierten Zustand des Wischblatts (12) an dem Tragelement (36) oder der Brücke (52) anliegt.

17. Wischblatt (12) nach Anspruch 16, **dadurch gekennzeichnet, dass** das Element eine Klammer (120) ist, die die Kopfleiste (30) von der der Wischlippe (26) abgewandten Seite umfasst und mit Zähnen (122) in den Steg (34) zwischen den Längsnuten (32) eindringt.

18. Wischblatt (12) nach Anspruch 16, **dadurch gekennzeichnet, dass** das Element eine Klammer (122) ist, die den Steg (34) der Wischleiste (24) von der Stirnseite umfasst und mit Zähnen (122) in den Steg (34) eindringt.

19. Wischblatt (12) nach Anspruch 16, **dadurch gekennzeichnet, dass** das Element am Ende der Längsnuten (32) angeordnete Füllstücke (128) sind, die durch ein Verbindungselement (130) in Form eines Nietstifts oder Klippses miteinander verbunden sind, die durch mindestens eine Öffnung (126) im Steg (34) geführt sind.

20. Wischblatt (12) nach Anspruch 16, **dadurch gekennzeichnet, dass** das Element ein am Ende der Längsnuten (32) angeordnetes u-förmiges Füllstück (132) ist, das mit seinen Schenkeln (134) in die Längsnuten (32) ragt und durch Kleben oder Schweißen oder Ultraschallschweißen mit der Wischleiste (24) fest verbunden ist.

21. Wischblatt (12) nach Anspruch 16, **dadurch gekennzeichnet, dass** das Element eine Klammer (136) aus Blech ist, die die Kopfleiste (30) von der der Wischlippe (26) abgewandten Seite umfasst und mit Nasen (138) seitlich in die Kopfleiste (30) eindringt.

22. Wischblatt (12) nach Anspruch 16, **dadurch gekennzeichnet, dass** das Element eine Klammer (142) aus Blech ist, die die Kopfleiste (30) von der der Wischlippe (26) abgewandten Seite umfasst und ein Fenster (144) aufweist, in das von einer Begrenzung ein Sperrhaken (146) ragt und mit einem abgewinkelten Ende (148) in die Kopfleiste (30) eindringt.

23. Wischblatt (12) nach einem der vorhergehenden Ansprüche, **dadurch gekennzeichnet, dass** die Wischleiste (24) nur an dem Ende relativ zum Tragelement (36) fixiert ist, das im Betrieb einer der Schwenkbewegung einen äußeren Kreisbogen beschreibt.

## Claims

1. Wiper blade (12) having an elongated, spring-elastic carrier element (36) which is pre-curved concavely with respect to a vehicle window (22) and which has at least one spring rail, and having a wiper strip (24) which is held by the carrier element (36), wherein the wiper strip (24) is secured close to at least one end in the longitudinal direction (20) relative to the carrier element (36) by an end cap (44) which has, on one longitudinal side, an opening which can be closed off by a flap (46) which can pivot about a pivoting axis (84) running in the longitudinal direction (20), into an open position and into a closed position, wherein securing means (56, 58, 66) are provided on the end cap (44) or the flap (46), which securing means (56, 58, 66) can be moved, through activation of the flap (46), into or out of an operative connection with the wiper strip (24) or with an element (120, 124, 128, 132, 136, 142) connected thereto, wherein the securing means (56, 58, 66) are supported in the longitudinal direction (20) on the carrier element (36) or on an element (52) which is permanently connected thereto and/or become detached from said carrier element (36) or an element (52) which is permanently connected thereto, **characterized in that** a securing means (58) which runs transversely with respect to a head strip (30) of the wiper strip (24) is provided on the inside of the flap (46), which securing means (58) presses on the head strip (30) in the closed state of the flap (46) and is supported in the longitudinal direction (20) on a bridge (52) which connects to one another two spring rails which run parallel one next to the other and serve as a carrier element (36) and the securing means (58) is embodied as a cutting blade which tapers in a wedge shape toward the head strip (30).

2. Wiper blade (12) according to one of Claims 1 and 2, **characterized in that** securing means (56) in the form of supports, which are supported on the carrier element (36) when the flap (46) is closed, are provided on both longitudinal sides of the head strip (30) on the inside of the flap (46).

3. Wiper blade (12) according to Claim 2, **characterized in that** the securing means (56) have lateral cutting blades (62) on their sides facing the head strip (30), which lateral cutting blades (62) penetrate the head strip (30) when the flap (46) is closed.

4. Wiper blade (12) according to Claim 1, **characterized in that** the wiper strip (24) has, in the end region of its head strip (30), a transverse groove (64) into which at least one blocking element (66) which is integrally formed onto the flap (46) engages when the flap (46) closes.

5. Wiper blade (12) according to Claim 1, **characterized in that** the wiper strip (24) has, in the end region of its head strip (30), a transverse groove (64) into which a transverse bolt (68) is inserted during mounting, which transverse bolt (68) is permanently connected to the carrier element (36).

6. Wiper blade (12) according to Claim 1, **characterized in that** the wiper strip (24) has, in the end region of its head strip (30), a transverse groove (64) which, during mounting, engages in a locking block (74) which is connected to the free end of a spring tongue (72) which is connected to the end cap (44).

7. Wiper blade (12) according to Claim 6, **characterized in that** the spring tongue (72) bears with a part protruding over the locking block (74) on the head strip (30).

8. Wiper blade (12) according to Claim 1, **characterized in that** a spring tongue (72), at whose free end a projection (96) which is pressed against the head strip (30) by the flap (46) when said flap closes is arranged, is integrally formed onto a base part (45) of the end cap (44).

9. Wiper blade (12) according to one of the preceding claims, **characterized in that** the flap (46) has, on its longitudinal edge which is remote from the pivoting axis (84), a latch (90) which engages in a corresponding cutout (92) in the base part (45) in the closed state of the flap (46).

10. Wiper blade (12) according to one of the preceding claims, **characterized in that** two securing arms (100) are provided on the inner side of the outwardly facing end wall (82) of the base part (45), said securing arms (100) running at a distance from one another in the longitudinal direction (20), engaging in the longitudinal grooves (32) of the wiper strip (24) and permanently securing the other free ends to the web (34) by their teeth (102), which face one another.

11. Wiper blade (12) according to Claim 10, **characterized in that** provided offset with respect to the wiper lip (26) of the wiper strip (24) on the end wall (82) in the region of the securing arms (100) is a short spigot (104) which penetrates the end side of the wiper strip (24) during mounting.

12. Wiper blade (12) according to Claim 10 or 11, **characterized in that** two guide fins (98), which run in the longitudinal direction (20) and enclose the bridge (52) between them, are arranged on the side of the securing arms (100) facing away from the wiper strip (24).

13. Wiper blade (12) according to one of the preceding claims, **characterized in that** the end cap (44) has an intermediate floor (112) with a longitudinal duct (108) which accommodates the part of the head strip (30) protruding over the carrier element (36), while the intermediate floor (112) is supported on the carrier element (36) to the side of the longitudinal duct (108), wherein wedge-shaped pressure elements (110), which generate, on the head strip (30), pressing forces directed onto the web (34) in the mounted state, are arranged in the longitudinal duct (108).

14. Wiper blade (12) according to one of Claims 1 to 12, **characterized in that** the end cap (44) has an intermediate floor (112) in which a sheet-metal hook (114), which runs in the longitudinal direction (20) and whose bent end (116) engages in the head strip (30) in the mounted state, is cast.

15. Wiper blade (12) according to Claim 13, **characterized in that** the sheet-metal hook (114) can be activated by an opening (118) in the flow profile (50) of the end cap (40).

16. Wiper blade (12) according to one of the preceding Claims, **characterized in that** an element (120, 124, 128, 132, 136, 142), which bears on the carrier element (36) or the bridge (52) in the mounted state of the wiper blade (12), is attached to the end of the wiper strip (24).

17. Wiper blade (12) according to Claim 16, **characterized in that** the element is a clamp (120) which embraces the head strip (30) from the side facing away from the wiper lip (26) and penetrates the web (34) between the longitudinal grooves (32) with teeth (122).

18. Wiper blade (12) according to Claim 16, **characterized in that** the element is a clamp (122) which embraces the web (34) of the wiper strip (24) from the end side and penetrates the web (34) with teeth (122).

19. Wiper blade (12) according to Claim 16, **characterized in that** the element comprises filler elements (128) which are arranged at the end of the longitudinal grooves (32) and are connected to one another by a connecting element (130) in the form of a riveted pin or clip and which are guided through at least one opening (126) in the web (34).

20. Wiper blade (12) according to Claim 16, **characterized in that** the element is a U-shaped filler element (132) which is arranged at the end of the longitudinal grooves (32), which projects with its limbs (134) into the longitudinal grooves (32) and is permanently connected to the wiper strip (24) by bonding or welding or ultrasonic welding.

21. Wiper blade (12) according to Claim 16, **characterized in that** the element is a clamp (136) made of sheet metal, which clamp (136) embraces the head strip (30) from the side facing away from the wiper lip (26) and penetrates the head strip (30) laterally with projections (138).

22. Wiper blade (12) according to Claim 16, **characterized in that** the element is a clamp (142) made of sheet metal, which clamp (142) embraces the head strip (30) from the side facing away from the wiper lip (26) and has a window (144) into which a locking hook (146) projects from a boundary and penetrates the head strip (30) with a bent end (148).

23. Wiper blade (12) according to one of the preceding claims, **characterized in that** the wiper strip (24) is secured relative to the carrier element (36) only at the end which describes an external circular arc during operation of one of the pivoting movement.

## Revendications

1. Balai d'essuie-glace (12) avec un élément de support allongé, élastique à la manière d'un ressort, pré-cintré de façon concave (36) vers une vitre de véhicule (22), qui présente au moins une armature élastique, et avec une lame d'essuie-glace (24), qui est portée par l'élément de support (36), dans lequel la lame d'essuie-glace (24) est fixée au moins près d'une extrémité en direction longitudinale (20) par rapport à l'élément de support (36) au moyen d'une coiffe d'extrémité (44), qui possède à une extrémité longitudinale une ouverture, qui peut être fermée par un clapet (46) qui peut pivoter autour d'un axe de pivotement (84) s'étendant dans la direction longitudinale (20) dans une position d'ouverture et dans une position de fermeture, dans lequel il est prévu sur la coiffe d'extrémité (44) ou sur le clapet (46) des moyens de fixation (56, 58, 66), qui peuvent être amenés en liaison active ou détachés de celle-ci, par l'actionnement du clapet (46), avec la lame d'essuie-glace (24) ou avec un élément (120, 124, 128, 132, 136, 142) relié à celle-ci, dans lequel les éléments de fixation (56, 58, 66) s'appuient en direction longitudinale (20) sur l'élément de support (36) ou sur un élément (52) solidaire de celui-ci, ou s'en écartent, **caractérisé en ce qu'**il est prévu sur le côté intérieur du clapet (46) un moyen de fixation (58) s'étendant transversalement à une réglette de tête (30) de la lame d'essuie-glace (24), lequel dans l'état fermé du clapet (46) presse sur la réglette de tête (30) et s'appuie en direction longitudinale (20) sur un pont (52), qui relie deux armatures élastiques s'étendant parallèlement l'une à côté de l'autre et servant d'élément de support (36), et le moyen de fixation (58) est réalisé sous la forme d'un couteau s'amincissant en forme de coin vers la réglette de tête (30).

2. Balai d'essuie-glace (12) selon la revendication 1 ou 2, **caractérisé en ce qu'**il est prévu sur les deux côtés longitudinaux de la réglette de tête (30), sur le côté intérieur du clapet (46), des moyens de fixation (56) en forme d'appuis, qui s'appuient sur l'élément de support (36) lorsque le clapet (46) est fermé.

3. Balai d'essuie-glace (12) selon la revendication 2, **caractérisé en ce que** les moyens de fixation (56) présentent sur leurs côtés tournés vers la réglette de tête (30) des couteaux latéraux (62), qui pénètrent dans la réglette de tête (30) lorsque le clapet (46) est fermé.

4. Balai d'essuie-glace (12) selon la revendication 1, **caractérisé en ce que** la lame d'essuie-glace (24) comporte, dans la région d'extrémité de sa réglette de tête (30), une rainure transversale (64) dans laquelle s'engage un élément de blocage (66) formé sur le clapet (46), lorsque le clapet (46) se ferme.

5. Balai d'essuie-glace (12) selon la revendication 1, **caractérisé en ce que** la lame d'essuie-glace (24) comporte, dans la région d'extrémité de sa réglette de tête (30), une rainure transversale (64) dans laquelle s'insère lors du montage un verrou transversal (68), qui est solidaire de l'élément de support (36).

6. Balai d'essuie-glace (12) selon la revendication 1, **caractérisé en ce que** la lame d'essuie-glace (24) comporte, dans la région d'extrémité de sa réglette de tête (30), une rainure transversale (64) dans laquelle s'engage au montage un bloc d'arrêt (74), qui est relié à l'extrémité libre d'une lamelle élastique (72) reliée à la coiffe d'extrémité (44).

7. Balai d'essuie-glace (12) selon la revendication 6, **caractérisé en ce que** la lamelle élastique (72) s'applique sur la réglette de tête (30) au moyen d'une partie saillante sur le bloc d'arrêt (74).

8. Balai d'essuie-glace (12) selon la revendication 1, **caractérisé en ce qu'**une lamelle élastique (72) est formée sur une partie de base (45) de la coiffe d'extrémité (44), lamelle dont l'extrémité libre porte un ergot (96) qui, lors de la fermeture du clapet (46), est pressé par ce dernier contre la réglette de tête (30).

9. Balai d'essuie-glace (12) selon l'une quelconque des revendications précédentes, **caractérisé en ce que** le clapet (46) présente sur son bord longitudinal situé à distance de l'axe de pivotement (84) un tenon (90) qui, dans l'état fermé du clapet (46), s'engage dans un évidement correspondant (92) de la partie de base (45).

10. Balai d'essuie-glace (12) selon l'une quelconque des revendications précédentes, **caractérisé en ce qu'**il est prévu sur le côté intérieur de la paroi frontale tournée vers l'extérieur (82) de la partie de base (45) deux bras de maintien (100) s'étendant à distance l'un de l'autre en direction longitudinale (20), qui s'engagent dans les rainures longitudinales (32) de la lame d'essuie-glace (24) et qui se tiennent fixement avec leurs dents tournées l'une vers l'autre (102) à d'autres extrémités libres sur la nervure (34).

11. Balai d'essuie-glace (12) selon la revendication 10, **caractérisé en ce qu'**il est prévu dans la région des bras de maintien (100) sur la face frontale (82), en décalage vers la lèvre d'essuyage (26) de la lame d'essuie-glace (24), un court tourillon (104) qui pénètre lors du montage frontalement dans la lame d'essuie-glace (24).

12. Balai d'essuie-glace (12) selon la revendication 10 ou 11, **caractérisé en ce que** deux nervures de guidage (98) s'étendant en direction longitudinale (20) sont disposées sur le côté des bras de maintien (100) détourné de la lame d'essuie-glace (24), et enferment entre elles le pont (52).

13. Balai d'essuie-glace (12) selon l'une quelconque des revendications précédentes, **caractérisé en ce que** la coiffe d'extrémité (44) comporte un fond intermédiaire (112) avec un canal longitudinal (108), qui contient la partie de la réglette de tête (30) saillante au-dessus de l'élément de support (36), tandis que le fond intermédiaire (112) s'appuie sur l'élément de support (36) latéralement au canal longitudinal (108), dans lequel des éléments de pression en forme de coin (110) sont disposés dans le canal longitudinal (108), qui dans l'état monté produisent sur la réglette de tête (30) des forces d'application dirigées vers la nervure (34).

14. Balai d'essuie-glace (12) selon l'une quelconque des revendications 1 à 12, **caractérisé en ce que** la coiffe d'extrémité (44) comporte un fond intermédiaire (112), dans lequel est moulé un crochet de tôle (114) s'étendant en direction longitudinale (20), dont l'extrémité coudée (116) s'engage dans l'état monté dans la réglette de tête (30).

15. Balai d'essuie-glace (12) selon la revendication 13, **caractérisé en ce que** le crochet de tôle (114) peut être actionné à travers une ouverture (118) dans le profilé d'écoulement (50) de la coiffe d'extrémité (40).

16. Balai d'essuie-glace (12) selon l'une quelconque des revendications précédentes, **caractérisé en ce qu'**un élément (120, 124, 128, 132, 136, 142) est fixé à l'extrémité de la lame d'essuie-glace (24), lequel dans l'état monté du balai d'essuie-glace (12) repose sur l'élément de support (36) ou sur le pont (52).

17. Balai d'essuie-glace (12) selon la revendication 16, **caractérisé en ce que** l'élément est une attache (120), qui entoure la réglette de tête (30) à partir du côté détourné de la lèvre d'essuyage (26) et qui pénètre avec des dents (122) dans la nervure (34) entre les rainures longitudinales (32).

18. Balai d'essuie-glace (12) selon la revendication 16, **caractérisé en ce que** l'élément est une attache (122), qui entoure la nervure (34) de la lame d'essuie-glace (24) à partir du côté frontal et pénètre avec des dents (122) dans la nervure (34).

19. Balai d'essuie-glace (12) selon la revendication 16, **caractérisé en ce que** l'élément est constitué par des pièces de remplissage (128) disposées à l'extrémité des rainures longitudinales (32), qui sont reliées les unes aux autres par un élément de liaison (130) en forme de tige de rivet ou de pince à déclic et qui sont menées à travers au moins une ouverture (126) dans la nervure (34).

20. Balai d'essuie-glace (12) selon la revendication 16, **caractérisé en ce que** l'élément est une pièce de remplissage en forme de U (132) disposée à l'extrémité des rainures longitudinales (32), qui pénètre avec ses branches (134) dans les rainures longitudinales (32) et qui est assemblée fixement à la lame d'essuie-glace (24) par collage ou par soudage ou par soudage aux ultrasons.

21. Balai d'essuie-glace (12) selon la revendication 16, **caractérisé en ce que** l'élément est une attache (136) en tôle, qui entoure la réglette de tête (30) à partir du côté détourné de la lèvre d'essuyage (26) et qui pénètre latéralement dans la réglette de tête (30) avec des ergots (138).

22. Balai d'essuie-glace (12) selon la revendication 16, **caractérisé en ce que** l'élément est une attache (142) en tôle, qui entoure la réglette de tête (30) à partir du côté détourné de la lèvre d'essuyage (26) et qui présente une fenêtre (144), dans laquelle un crochet d'arrêt (146) pénètre à partir d'une délimitation et pénètre avec une extrémité coudée (148) dans la réglette de tête (30).

23. Balai d'essuie-glace (12) selon l'une quelconque des revendications précédentes, **caractérisé en ce que** la lame d'essuie-glace (24) n'est fixée par rapport à l'élément de support (36) qu'à l'extrémité, qui en fonctionnement de l'un des mouvement de pivotement décrit un arc de cercle extérieur.
